# EUROPEAN PATENT SPECIFICATION

(11) **EP 2 601 431 B1**
(45) Date of publication and mention of the grant of the patent: **14.10.2015**
(21) Application number: 11755102.8
(22) Date of filing: 04.08.2011
(51) Int. Cl.: E21B 33/037, E21B 17/01, F16L 58/04, F16L 58/00

(54) **CORROSION PROTECTION OF PIPES SUSPENDED IN SEAWATER**
KORROSIONSSCHUTZ VON IN MEERWASSER HÄNGENDEN ROHREN
PROTECTION CONTRE LA CORROSION DE TUYAUX SUSPENDUS DANS L'EAU DE MER

(30) Priority: 04.08.2010 GB 201013126
(43) Date of publication of application: 12.06.2013
(73) Proprietor: Flexlife Limited, Aberdeen AB23 8HZ (GB)
(72) Inventor: KEYWORTH, Craig Scott, Lincolnshire LN8 3TS (GB)
(74) Representative: Crosby, Wendy Agnes
(86) International application number: PCT/GB2011/051483
(87) International publication number: WO 2012/017250

(56) References cited:
- WO-A1-2008/099150
- GB-A- 2 316 990
- US-A- 4 469 469
- US-A- 4 993 875

## Description

This invention relates to a method of corrosion protection and more particularly relates to a method of corrosion protection of a tubular member such as a pipe and more specifically to a method of corrosion protection of a pipe which is located in a potentially corrosive environment.

Offshore production of hydrocarbons from subsea wells typically involves a well which extends from the seabed to the required depth at which the hydrocarbon reservoir is located. Recovery of hydrocarbons from the well to the surface is typically carried out using pipes such as subsea risers of a suitable diameter and length which extend from a well head or manifold on the seabed to a platform or vessel tethered on the surface above the well. It is not unusual for the risers to extend over hundreds or indeed thousands of meters between the wellhead and the surface.

The seawater surrounding a riser forms a corrosive environment through which the riser must extend and over time any damage to the outer surface of the riser can allow seawater to permeate into the layers of the riser and from there into the hydrocarbon stream, or alternatively, can allow the hydrocarbons flowing in the riser to leak into the surrounding seawater.

The corrosive effects of the seawater are particularly evident in the area immediately below the surface of the sea which is generally known as the "splash zone". This may extend for a depth of around 50 meters although prevailing conditions in different locations can extend the splash zone to around 30-100 m. In this region the effects of weather such as prevailing winds and tides cause waves on the surface of the water and turbulence under the surface which may extend for around 30 - 100 meters depending upon the prevailing weather conditions. This turbulence has the effect of repeatedly forcing the seawater against the outer surface of the riser in an abrasive action which can accelerate any corrosive damage to the riser.

The effects of corrosion can be lessened by careful selection of materials used for riser but this generally has a direct effect to the cost of the materials and therefore the overall profitability of the extraction operation.

Various techniques have been tried to differing results to alleviate the problems associated with corrosion of pipes due to contact with surrounding sea water. One solution is to provide an anti-corrosion jacket around the outer surface of the pipe to stop sea water from coming into contact with the outer surface of the pipe. Such a system is both expensive and difficult to fit once the pipe is in place offshore. In some locations it may also be dangerous to have divers in the water carrying out the mounting operation and it is difficult to establish an effective barrier between the sea water and the surface of the pipe.

Another known technique is to provide an anti-corrosion coating around the outer surface of the pipe. Whilst this provides greater protection than a jacket, the anti-corrosion layer has to be formed on the outer surface of the pipe before the pipe is fixed in place and therefore increases the manufacturing costs of the pipe and also the transport costs due to the increase in weight of the resulting coated pipe.

Such a coating does not lend itself to localised maintenance and repair operations and any breach in the outer protection of the coating will mean that the pipe or at least a localised section of the pipe, has to be removed which in turn means shutting down production from the installation whilst this remedial work is carried out.

Other techniques include cathodic protection of the pipe. This involves making the surface of the pipe work as a cathode of an electrochemical cell with another metal such as aluminium placed in contact with the outer surface of the pipe to act as an anode of the cell. This is often used for steel pipelines where the anode is provided by aluminium which is more easily corroded than the steel of the pipe. Such a protection method can be effective in some circumstances but this is a costly solution and does not easily lend itself to localised protection of a pipe in situ.

However, once corrosion has been detected in the pipe, there are limited options available for managing the integrity of the pipe. In most cases, the pipe, or at least a substantial section of the pipe will have to be replaced which typically means shutting down production from the well whilst the damaged section of pipe is replaced.

For many operators, replacement of corroded pipe sections represents a significant part of the overall maintenance operation of hydrocarbon production facilities.

US 4 469 469 A discloses use of an anti-corrosion system in a suspended seawater pipe, wherein a tubular casing is sealed by end caps or boots which provide a closed, sealed chamber around the outer surface of the pipe.

WO 2008/099 150 A1 discloses a pipeline with an outer weight member being adapted to receive an inner pipe therein and providing negative buoyancy to the inner pipe; the gap between outer and inner pipe can be filled with an anti-corrosive or another suitable material which can support the inner pipe and/or provide corrosion resistance thereto.

The present invention aims to provide a simple and effective method of providing corrosion protection of tubular members and seeks to offer a solution which is particularly suitably adapted for use with existing installations without the need to remove the existing pipework. This would offer a significant improvement over known techniques both in respect of time and cost savings.

According to the present invention there is provided a method of protecting a region of a pipe suspended in seawater within an open ended tubular member such that the pipe is spaced from the tubular member against corrosion, the method comprising the step of deploying a liquid providing or adapted to provide corrosion protection to the pipe into the space between the pipe and the tubular member through one of an upper or lower open end of the tubular member to displace seawater within the space from the other of the upper or lower open such that the liquid surrounds the selected region of the pipe wherein the liquid has or is adapted to have a neutral buoyancy at a depth representative of the location of the selected region of the pipe.

Preferably the method further comprises the step of maintaining a level of liquid within the space to cover the selected area.

The method may particularly be used to provide corrosion protection to a damaged region of a pipe in order to arrest the corrosion of the pipe and to prevent further damage occurring at the same location.

Preferably the method further includes an initial step of suspending a tubular member around the outer surface of the pipe.

Preferably the liquid is poured or pumped into the space, most preferably from an injection site at the upper end of the tubular member although the liquid may be introduced from an injection site at the lower end of the tubular member.

Preferably the space is an annulus between the pipe and the tubular member.

More preferably the pipe is suspended in an I-tube.

Preferably the liquid is poured or pumped into the annulus directly or into the space between the tubular member and the pipe from a surface mounted facility.

Advantageously the liquid may comprise one or more hydrocarbons, hydrocarbon waxes, vegetable oils, silicone elastomers, silicone rubbers or silicone oils. The liquid may also comprise antibacterial agents and/or corrosion inhibitors, spheres, microspheres, polymeric materials, metal salts, gelling agents or particles which modify the density of the liquid.

The liquid may be deployed into the annulus or into the body either from a surface mounted facility or by diver/ROV installation.

An embodiment of the present invention will now be disclosed with reference to the accompanying drawings in which:-
Figure 1 is a schematic diagram of a pipe or riser with a region of corrosion in the outer surface of the pipe below the surface of the surrounding seawater;
Figure 2 is a schematic diagram of an initial stage of a method according to the present invention to provide corrosion protection to the affected region of the pipe;
Figure 3 is a schematic diagram showing the affected pipe at a further stage of the protection method, and
Figure 4 is a schematic diagram showing the affected pipe once the method of the present invention has been carried out.

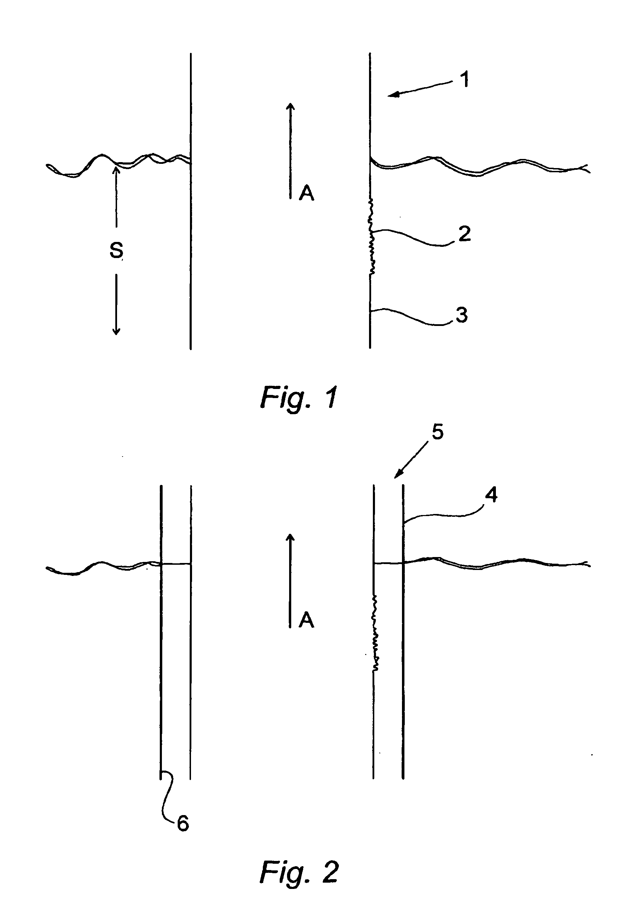

Turning now to the figures, there is shown in figure 1 a pipe or riser 1 which is shown suspended from a floating vessel or platform (not shown) in seawater. Fluids are pumped up the pipe in the direction of arrow A from a subsea production facility (not shown).

In the figure, a region of corrosion 2 is shown on the outer side wall 3 of the pipe below the surface of the seawater. In this case, the area of corrosion is shown as being within the splashzone S immediately below the surface. The corroded area of the pipe is vulnerable to continued abrasive action of the sea water against the outer surface of the pipe which can lead to a breach in the side wall of the pipe and ingress of seawater into the production stream or alternatively a leak of production fluids from the pipe into the surrounding seawater.

Figure 2 illustrates the first stage of a method according to one aspect of the present invention to provide corrosion protection to the affected area of the pipe. In this embodiment, a tubular member 4 is placed around the affected area of the pipe. The tubular member may be a pipe or I-tube of a larger diameter than the affected pipe and this outer tube may be placed around the upper end of the affected pipe from above such that the outer tube is lowered into position around the upper end of the affected pipe.

Alternatively, the outer tube may be provided in two or more sections which are connected together around the outer surface of the affected pipe to form an enclosed environment around the affected area of the pipe.

As the tubular member 4 is lowered over the affected pipe an annulus 5 is formed between the outer surface 3 of the affected pipe and the inner surface 6 of the tubular member and seawater enters the annulus and pushes air out of the open upper end of the annulus such that the level of seawater in the annulus equalizes with that of the seawater surrounding the outer surface of the tubular member.

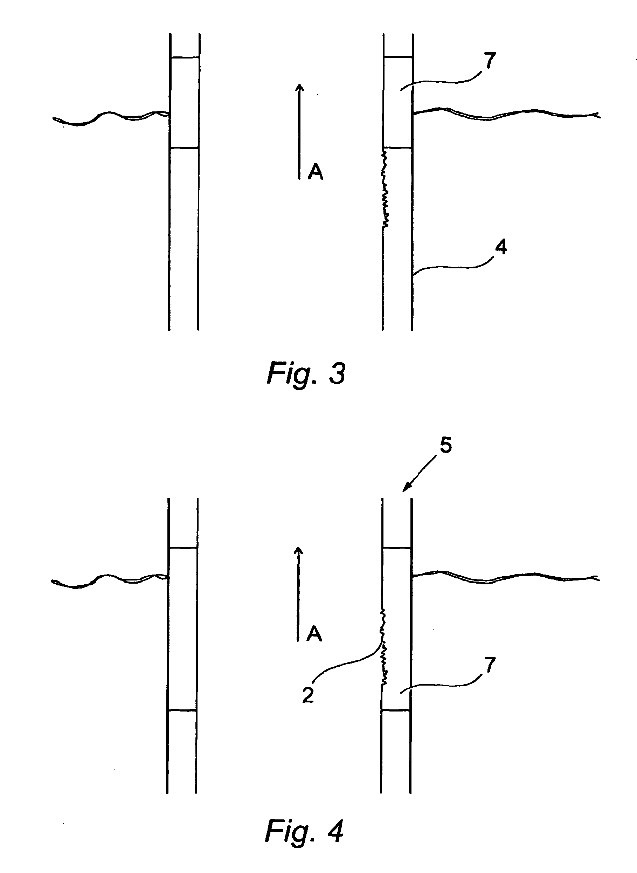

As shown in Figure 3, in the illustrated embodiment a liquid 7 is then introduced into the annulus on top of the seawater in the annulus.

In this application the term liquid is taken to mean fluids except for gasses, but specifically includes inert liquids, gels, gelled materials, gelled materials with other components added to modify the viscosity and or density of the fluid, particle suspensions, Newtonian and non-Newtonian liquids, emulsions. Modifying may increase or decrease the properties above. The term liquid is also taken to mean blends and combinations of the above.

In this embodiment the liquid is a water in oil emulsion formed by mixing water with an immiscible fluid such as mineral oil which is a liquid petrolatum composed of a blend of hydrocarbons. Mineral oil has a specific gravity of between 0.818 and 0.905 and is classified as heavy or light, heavy oil falling into the 0.845-0.905 range and light in the range 0.818 to 0.880. Mineral oil compositions generally include combinations of alkanes typically having 15-40 carbon chains and cyclic paraffins. In this embodiment white mineral oil having a chemical formula (CH2)n where n is between 20 and 40 is used. Surfactants may also be added to the liquid. The liquid is pumped into the annulus.

Further examples of liquids which are preferred include triglycerides such as vegetable oils, rapeseed oil, olive oil, soyabean oil, water in oil emulsions, oil in water emulsions or water containing a miscible fluid such as methanol which acts to lower its density. In some embodiments where vegetable oils, rapeseed oil or olive oil are used, the oil may be treated with a biocide to ensure that its solidification point is below the ambient temperature. Alternatively, an oil which solidifies or forms a paste such as Vaseline^{(RTM)} or a mixture of palm oil and other vegetable oils may be utilised.

Alternatively, liquids such as water treated to reduce its corrosive tendency through the addition of anticorrosion compounds such as Oxygen scavengers or passivating chemicals such as alkalis could be used. Biological growth control may also be addressed by the use of additives.

The use of gelled fluids is also anticipated since these will assist in creating a non corrosive environment the dynamic viscosity of the gelled materials considered suitable for use in this invention are considerably in excess of 500 Pa.S and preferably in the range 2000-100,000 Pa.s. It is also envisaged that solid materials having a viscosity of over 5,000,000 Pa.S may also be used.

The preferred gelled materials include xanthan gums, guar gums, wellan gums, alginates and their gums from natural sources as well as synthetic polymers such as polyvinyl alcohol and polyvinyl acetate.

Additionally, the liquid is selected to have neutral buoyancy at a depth which is sufficient to cover the corroded area of the affected pipe.

Examples of the liquids used in the present invention are described below.

### Example 1

2.0ml of Phosphoric Acid Decyl octyl ester between 0.3 and 3% by weight was mixed with 150ml of base oil such as DF 1 base oil available from Atofina Ltd. To this mixture 2.0 ml of ferric sulphate was added dropwise into the stirred solution. The fluid was left to gel for a period of 24 hours although gel formed from between 2-5 minutes of adding the ferric source.

### Example 2

7.5g of glass microspheres were stirred into a container with 150 ml of base oil such as DF 1 base oil available from Atofina Ltd. To this mixture, 0.5 ml orthophosphate ester, 0.5 ml ferric sulphate at 0.25 to 2.0 moles per mole of phosphate ester were added. The fluid was left to gel for a period of 24 hours although gel formed from between 2-5 minutes from adding the ferric source.

### Example 3

0.5g of Hydroxypropylcellulose, a high viscosity, film forming polymer available as Klucel H was added to 150ml of methanol. The mixture was allowed to fully hydrate with the resulting fluid being allowed to hydrate for 24 hours. 20g of glass microspheres with a density of 0.15 g cm⁻³ were added and fully dispersed in the gel to give a resultant gelled fluid with a density of 0.5 gcm⁻³ .

### Example 4

A gel is made up of 95% (by mass) Pilot 900 base oil and 5% (by mass) amorphous fumed silica. The density can be controlled by the addition of CaCO3, barite, Silica flour or Mn3O4. The flashpoint of this material is 160°C well in excess of the required minimum.

The liquid is poured or pumped into the annulus 5 between the affected pipe and the outer tube and as the liquid 6 fills the annulus, the sea water in the annulus is displaced out of the open lower end of the outer tube. As further liquid is pumped into the annulus, the height of the column of protective liquid in the annulus increases and a similar amount of sea water is displaced out of the lower end of the outer tube until eventually the column of protective liquid fully covers the corroded area of the affected pipe.

Figure 4 shows the situation where the protective liquid has been pumped into the annulus and has displaced sufficient sea water such that the column of protective liquid cover the corroded area of the pipe and also extends a sufficient distance above and below the corroded area such that minor fluctuations in the level of the liquid do not expose the corroded region of the pipe to further attack from sea water.

Once this condition is reached, the upper end of the annulus can be sealed if required to prevent ingress of other materials into the annulus above the protective liquid. During ongoing maintenance of the pipe, the level of the column of the protective liquid in the annulus can be easily checked to ensure that the corroded region of the pipe remains fully covered by the protective liquid. Where necessary, the upper end of the annulus can be reopened and the level of the protective liquid can be topped up to maintain the protective operation of the outer tube.

In the event that access is required to the outer surface of the pipe, such as for inspection or replacement, the protective liquid in the annulus between the pipe and the outer tube can be pumped out of the annulus and the outer tube removed, either by lifting the tube clear of the upper end of the pipe or by removing the sections of the tube surrounding the pipe.

In the illustrated embodiment monitoring of the level of liquid in the annulus may be carried out remotely using sensors mounted within the annulus. The level of liquid may be topped up from a reservoir mounted for example on the platform from which the pipe is suspended and the instructions to introduce further liquid may be provided from an operator in a remote location in response to signals generated by the sensors or may be provided directly in response to said signals thereby reducing the costs of monitoring the level of liquid further.

In some embodiments, the outer tube may be transparent to provide for visual confirmation that the protective liquid is covering the corroded region of the pipe.

It will be immediately apparent to the skilled person, that the present invention provides a method of protecting a corroded region of a pipe, or a region in which corrosion is suspected or likely to occur, which is both quick and simple to carryout. Furthermore, the method can be used on existing installations and pipes in situ and therefore avoids the need to shut down and replace extensive sections of pipes or risers in production facilities.

Additionally, the method of the present invention provides for simple and effective ongoing maintenance of protected pipes and risers.

Furthermore, the method may be used on both flexible and non-flexible pipes and risers.

In the embodiments described above, the liquid is poured or pumped directly into the annulus from above and displaces surrounding seawater from the lower end of the tubular member 4. In another non illustrated embodiment belonging to the invention the liquid is pumped into the lower end of the annulus and seawater is displaced from the upper end of the tubular member.

In a further non illustrated embodiment a repair tool kit comprising an annular body may be clamped around the outer surface of the pipe the body covering the region in which corrosion protection is required. A seal is created between the upper and lower ends of the body and the outer surface of the pipe such that the body sits in the annulus between the pipe and the tubular member and in this embodiment liquid is pumped into the space between the body and the pipe. In this embodiment an activating agent is preferably added to the liquid to cause the liquid to set preferably into a solid or jelly like substance. An example of the activating agent would be a composition of 47% Silicic acid tetraethyl ester, 45% Tetraethyl silicate and 8% Dimethylbis[(1-oxoneodecyl)oxy] stannane.

Modifications to the present invention may be made such as the protective liquid could comprise a mixture of the liquids previously disclosed. For example, a vegetable oil may be combined with a gelled liquid. Other chemicals such as anti bacterial agents or corrosion inhibitors can also be added to the gelled fluids described in the examples and embodiments above.

In further modifications, the liquid may comprise a polymeric material and a transition metal salt such as a ferric salt in addition to a hydrocarbon. The polymeric material may be a phosphate and more preferably an orthophosphate such as orthophosphate ester. The orthophosphate ester may have the structure of formula:

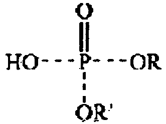

Where R is a straight or branched chain alkyl or alkaryl group having about 6 to about 18 carbon atoms and R' is hydrogen or an aryl, alkaryl or alkyl group having about up to 18 carbon atoms.

Preferably about 0.3% to 3%by weight based on the hydrocarbon/water liquid, of the phosphate is added.

Preferably the ferric salt and polymeric materials are added in an equimolar ratio.

Materials which undergo a change in phase, such as form liquid to solid, on cooling are used in embodiments of the invention as these release heat thereby extending the time it takes for the tubular contents to cool down.

As described above, in some embodiments or examples cenospheres or low density microspheres which are hollow and typically comprise glass, ceramics, plastics or a combination thereof with a density ranging typically from 0.004 gcm⁻³ to 0.99 gcm⁻³ which are added to the mixture in order to reduce thermal conductivity, improve mechanical strength and lower the density of the liquid. Such components allow for density tuning of the liquid depending upon the specific application of the method in a required location.

Optionally, spheres made of polymers and enclosing hydrocarbon gas can be added to provide reduced thermal conductivity and lower density and/or waxes may be added to the hydrocarbon to increase its specific heat capacity.

In some embodiments/ examples, some or all of the gelling components may be added incorporated within a wax of a known melting point to either slow the rate of gel formation or arrest it until the wax melts on the commencement of production. Other materials such as microspheres, viscosifiers, foams, syntactic materials and phase change materials may also be used.

The gelling effect of the liquid may be provided or further enhanced by the additional of polymers, clays, colloidal silicas, fumed silicas, high viscosity liquids, catalytic crosslinking organosilacates or surfactant blends which result in a high viscosity. The choice of which system is used will depend upon the installation being protected and the local and ambiant conditions.

Gel properties can include Newtonian and non-Newtonian systems where the gel can be rheopectic, shear-thinning, shear-thickening, a bingham plastic, thixotropic or a dilatant and the particular rheological profile of the liquid is chosen depending upon the conditions in which the liquid is being used.

The physical properties of the gel can be varied for example the thermal properties, density, specific heat capacity and conductivity can all be varied through the use of additives.

Stablized foam may be used in embodiments of the invention with the additional of a surfactant and inclusion of a gas. Suitable surfactants include, but are not limited to, suphates, sulphates, betaines, ethozylates, sulfosuccinates. The gas can comprise for example, oxygen, nitrogen, carbon dioxide.

The gas and fluid chosen will preferably have a high flashpoint, for example above 65ºC and low vapour pressure for safety.

The liquid used in the present invention will preferably have a density less than water or have the same density or be heavier than the surrounding water in the environment in which the invention is put into effect but blended with low density material to lower the average density to a density which is less than the surrounding water. Alternatively or additionally heavy particles may be suspended in the liquid to make it heavier than the surrounding water in the environment.

Antibacterial agents and/or corrosion inhibitors or additives prevent fluid and gas migration may be added to any of the embodiments or examples of the invention. Furthermore, chemicals that scavenge free radical materials can also be added to the liquids used in the present invention.

In a further modification, the outer tube may be replaced by an I-tube and the corroded pipe may be suspended within the I-tube, the annulus being formed between the outer surface of the pipe and the inner surface of the Itube.

In some embodiments, the liquids may be coloured in order that they can be easily visually inspected to give an indication of the height of the column of protective liquid in the annulus. Alternatively, or additionally, the outer tube may be calibrated to provide for the visual check on the height of the column of liquid.

## Claims

1. A method of protecting a region of a pipe (1) suspended in seawater within an open ended tubular member (4) such that the pipe is spaced from the tubular member against corrosion, the method comprising the step of deploying a liquid (7) providing or adapted to provide corrosion protection to the pipe into the space (5) between the pipe and the tubular member through one of an upper or lower open end of the tubular member to displace seawater within the space from the other of the upper or lower open end of the tubular member such that the liquid surrounds the selected region of the pipe wherein the liquid has or is adapted to have a neutral buoyancy at a depth representative of the location of the selected region of the pipe.

2. A method according to claim 1 further comprising the step of maintaining a level of liquid within the space to cover the selected area.

3. A method according to any preceding claim further including an initial step of suspending a tubular member around the outer surface of the pipe.

4. A method according to claim 3 wherein the tubular member is an I-tube.

5. A method according to any preceding claim, wherein the liquid is poured or pumped into the space.

6. A method according to claim 5, wherein the liquid is poured or pumped into the space from the upper end of the tubular member.

7. A method according to claim 5 or 6 wherein the liquid is poured or pumped into the space or into the body from a surface mounted facility.

8. A method according to claim 5 or 6 wherein the liquid is deployed by a diver and/or ROV installation.

9. A method according to any of the preceding claims further including the step of modifying the density and/or viscosity of the liquid before it is deployed into the space.

10. A method according to any of the preceding claims wherein the liquid comprises one or more hydrocarbons, hydrocarbon waxes, vegetable oils, silicone elastomers, silicone rubbers or silicone oils, antibacterial agents and/or corrosion inhibitors, spheres, microspheres, polymeric materials, metal salts, gelling agents or particles.

## Patentansprüche

1. Ein Verfahren zum Schützen eines Bereichs eines in Meerwasser aufgehängten Rohrs (1) innerhalb eines röhrenförmigen Elements (4) mit offenem Ende, so dass das Rohr von dem röhrenförmigen Element gegen Korrosion mit Abstand angeordnet ist, wobei das Verfahren den Schritt des Ausbringens einer Flüssigkeit (7), die dem Rohr in den Raum (5) zwischen dem Rohr und dem röhrenförmigen Element durch eines eines oberen oder unteren offenen Endes des röhrenförmigen Elements Korrosionsschutz bereitstellt oder angepasst ist, diesen bereitzustellen, um Meerwasser innerhalb des Raums von dem anderen des oberen oder unteren offenen Endes des röhrenförmigen Elements zu verlagern, so dass die Flüssigkeit den ausgewählten Bereich des Rohrs umgibt, wobei die Flüssigkeit bei einer Tiefe, die repräsentativ für den Ort des ausgewählten Bereichs des Rohrs ist, einen Nullauftrieb aufweist oder angepasst ist, diesen aufzuweisen.

2. Verfahren gemäß Anspruch 1, das ferner den Schritt des Aufrechterhaltens eines Pegels an Flüssigkeit innerhalb des Raums, um die ausgewählte Fläche abzudecken, beinhaltet.

3. Verfahren gemäß einem der vorhergehenden Ansprüche, das ferner einen anfänglichen Schritt des Aufhängens eines röhrenförmigen Elements um die äußere Oberfläche des Rohrs umfasst.

4. Verfahren gemäß Anspruch 3, wobei das röhrenförmige Element ein I-Rohr ist.

5. Verfahren gemäß einem der vorhergehenden Ansprüche, wobei die Flüssigkeit in den Raum gegossen oder gepumpt wird.

6. Verfahren gemäß Anspruch 5, wobei die Flüssigkeit von dem oberen Ende des röhrenförmigen Elements in den Raum gegossen oder gepumpt wird.

7. Verfahren gemäß Anspruch 5 oder 6, wobei die Flüssigkeit von einer oberflächenmontierten Einrichtung in den Raum oder in den Körper gegossen oder gepumpt wird.

8. Verfahren gemäß Anspruch 5 oder 6, wobei die Flüssigkeit durch einen Taucher und/oder eine ROV-Installation ausgebracht wird.

9. Verfahren gemäß einem der vorhergehenden Ansprüche, das ferner den Schritt des Modifizierens der Dichte und/oder Viskosität der Flüssigkeit, bevor sie in den Raum ausgebracht wird, umfasst.

10. Verfahren gemäß einem der vorhergehenden Ansprüche, wobei die Flüssigkeit einen oder mehrere Kohlenwasserstoffe, Kohlenwasserstoffwachse, Pflanzenöle, Siliconelastomere, Silicongummis oder Siliconöle, antibakterielle Mittel und/oder Korrosionsinhibitoren, Kugeln, Mikrokugeln, Polymermaterialien, Metallsalze, Geliermittel oder -partikel beinhaltet.

## Revendications

1. Une méthode de protection d'une région d'un tuyau (1) suspendu dans de l'eau de mer au sein d'un élément tubulaire à extrémité libre (4) de sorte que le tuyau soit espacé de l'élément tubulaire pour le protéger contre la corrosion, la méthode comprenant l'étape de déploiement d'un liquide (7) apportant ou conçu pour apporter une protection contre la corrosion au tuyau se trouvant dans l'espace (5) entre le tuyau et l'élément tubulaire par une extrémité parmi une extrémité libre supérieure et une extrémité libre inférieure de l'élément tubulaire afin de déplacer l'eau de mer au sein de l'espace à partir de l'autre extrémité parmi l'extrémité libre supérieure et l'extrémité libre inférieure de l'élément tubulaire de sorte que le liquide entoure la région sélectionnée du tuyau, le liquide ayant ou étant conçu pour avoir une flottabilité neutre à une profondeur représentative de l'endroit où se trouve la région sélectionnée du tuyau.

2. Une méthode selon la revendication 1 comprenant en sus l'étape de maintien d'un niveau de liquide au sein de l'espace afin de recouvrir la zone sélectionnée.

3. Une méthode selon n'importe quelle revendication précédente comportant en sus une étape initiale de suspension d'un élément tubulaire autour de la surface externe du tuyau.

4. Une méthode selon la revendication 3 dans laquelle l'élément tubulaire est un tube en I.

5. Une méthode selon n'importe quelle revendication précédente, dans laquelle le liquide est versé ou pompé dans l'espace.

6. Une méthode selon la revendication 5, dans laquelle le liquide est versé ou pompé dans l'espace à partir de l'extrémité supérieure de l'élément tubulaire.

7. Une méthode selon la revendication 5 ou la revendication 6 dans laquelle le liquide est versé ou pompé dans l'espace ou dans le corps à partir de moyens montés en surface.

8. Une méthode selon la revendication 5 ou la revendication 6 dans laquelle le liquide est déployé par un plongeur et/ou une installation à ROV.

9. Une méthode selon n'importe lesquelles des revendications précédentes comportant en sus l'étape de modification de la masse volumique et/ou viscosité du liquide avant son déploiement dans l'espace.

10. Une méthode selon n'importe lesquelles des revendications précédentes dans laquelle le liquide comprend un ou plusieurs des suivants : des hydrocarbures, des cires d'hydrocarbure, des huiles végétales, des élastomères de silicone, des caoutchoucs de silicone ou des huiles de silicone, des agents antibactériens et/ou des inhibiteurs de corrosion, des sphères, des microsphères, des matériaux polymériques, des sels de métaux, des agents gélifiants ou des particules.
